# EUROPEAN PATENT SPECIFICATION

(11) **EP 2 215 784 B1**
(45) Date of publication and mention of the grant of the patent: **06.07.2011**
(21) Application number: 08857019.7
(22) Date of filing: 14.11.2008
(51) Int. Cl.: H04L 12/56, H04W 74/08, H04W 84/12, H04W 74/06

(54) **PROTECTION FOR DIRECT LINK SETUP (DLS) TRANSMISSIONS IN WIRELESS COMMUNICATION SYSTEMS**
SCHUTZ FÜR DIREKTVERBINDUNGSAUFBAU (DLS) ÜBERTRAGUNGEN IN DRAHTLOSEN KOMMUNIKATIONSSYSTEMEN
PROTECTION POUR DES TRANSMISSIONS DLS (ÉTABLISSEMENT DE LIAISON DIRECTE) DANS DES SYSTÈMES DE COMMUNICATION SANS FIL

(30) Priority: 28.11.2007 US 990904 P; 06.11.2008 US 266516
(43) Date of publication of application: 11.08.2010
(60) Divisional application: 11152125.8
(73) Proprietor: QUALCOMM Incorporated, San Diego, California 92121-1714 (US)
(72) Inventor: SURINENI, Shravan K., San Diego California 92121-1714 (US); NANDA, Sanjiv, San Diego California 92121-1714 (US)
(74) Representative: O'Neill, Aoife
(86) International application number: PCT/US2008/083702
(87) International publication number: WO 2009/073347

(56) References cited:
- WO-A-2005/039105
- WO-A-2007/022522
- US-A1- 2004 258 039
- US-A1- 2005 286 446
- US-A1- 2006 114 826
- US-A1- 2007 002 814
- KORMENTZAS G ET AL: "The IEEE 802.11g standard for high data rate WLANs" IEEE NETWORK, IEEE SERVICE CENTER, NEW YORK, NY, US, vol. 19, no. 3, 1 May 2005 (2005-05-01), pages 21-26, XP011134801 ISSN: 0890-8044

## Description

### CROSS-REFERENCE TO RELATED APPLICATION

This application claims benefit of priority from U.S. Provisional Patent Application Serial No. 60/990,904, entitled "Protection for direct link setup (DLS) transmissions in wireless communication systems" and filed November 28, 2007.

### FIELD

Embodiments of the present disclosure generally relate to wireless communications and, more particularly, to facilitating contention-free communications between stations.

### BACKGROUND

A wireless local area network (WLAN) is typically made up of a group of stations (STAs) that pass information amongst themselves and a network, through an access point (AP). The stations and access point, which is typically connected to a wired network, are often referred to as a basic service set (BSS).

In a WLAN, the AP typically acts as a center of distribution. In a traditional WLAN, STAs are not normally allowed to communicate directly with each other and must rely on the AP for the delivery of frames between STAs. However, STAs with QoS facility (QSTAs) may transmit frames directly to another by setting up data transfer using what is referred to as Direct Link Setup (DLS).
US 2006/114826 A1 discloses a method for establishing a direct link in a WLAN by sending a RTS message by a first station to an access point within a BSS and receiving a CTS message in response, one of the messages including duration fields.

A DLS link is established when one QSTA (e.g., STA1) sends a DLS request frame to the AP with QoS facility (QAP). This request includes the capabilities of STA1 and the address of the second QSTA (e.g., STA2) with which the DLS setup is requested. If DLS is allowed in the BSS, the QAP forwards this information to the intended recipient STA2. If STA2 accepts this DLS connection, it sends a DLS response frame to the QAP, which it will forward on to STA1. After this initial setup, STA1 & STA2 will be able to exchange frames directly.

If a third STA (STA4) exists in the BSS, hidden from the two STAs that established the DLS link, then the hidden STA that is unaware of the DLS link may start its own transmission causing collision. Accordingly, what is needed is a technique for protecting DLS frames from collision with frames transmitted from hidden stations.

### SUMMARY

Certain embodiments of the present disclosure provide a method for establishing a direct link setup (DLS) connection between stations in a wireless local area network. The method generally includes sending a ready-to-send (RTS) frame by a first station, directed to an access point within a basic service set (BSS), receiving a clear-to-send (CTS) frame sent from the AP, sent responsive to the RTS, wherein at least one of the RTS and CTS frames have duration fields set to accommodate expected data frame transmissions from the first station to a second station in the BSS on the DLS connection, and exchanging, by the first station, data frames directly with the second station on the DLS connection.

Certain embodiments provide an apparatus for establishing a direct link setup (DLS) connection between stations in a wireless local area network. The apparatus generally includes logic for sending a ready-to-send (RTS) frame by a first station, directed to an access point within a basic service set (BSS) logic for receiving a clear-to-send (CTS) frame sent from the AP, sent responsive to the RTS, wherein at least one of the RTS and CTS frames have duration fields set to accommodate expected data frame transmissions from the first station to a second station in the BSS on the DLS connection logic for exchanging, by the first station, data frames directly with the second station on the DLS connection.

Certain embodiments provide an apparatus for establishing a direct link setup (DLS) connection between stations in a wireless local area network. The apparatus generally includes means for sending a ready-to-send (RTS) frame by a first station, directed to an access point within a basic service set (BSS) means for receiving a clear-to-send (CTS) frame sent from the AP, sent responsive to the RTS, wherein at least one of the RTS and CTS frames have duration fields set to accommodate expected data frame transmissions from the first station to a second station in the BSS on the DLS connection, and means for exchanging, by the first station, data frames directly with the second station on the DLS connection.

Certain embodiments provide a computer-program product for establishing a direct link setup (DLS) connection between stations in a wireless local area network, comprising a computer readable medium having instructions stored thereon, the instructions being executable by one or more processors. The instructions generally include instructions for sending a ready-to-send (RTS) frame by a first station, directed to an access point within a basic service set (BSS), instructions for receiving a clear-to-send (CTS) frame sent from the AP, sent responsive to the RTS, wherein at least one of the RTS and CTS frames have duration fields set to accommodate expected data frame transmissions from the first station to a second station in the BSS on the DLS connection, and instructions for exchanging, by the first station, data frames directly with the second station on the DLS connection.

### BRIEF DESCRIPTION OF THE DRAWINGS

So that the manner in which the above-recited features of the present disclosure can be understood in detail, a more particular description, briefly summarized above, may be had by reference to embodiments, some of which are illustrated in the appended drawings. It is to be noted, however, that the appended drawings illustrate only certain typical embodiments of this disclosure and are therefore not to be considered limiting of its scope, for the description may admit to other equally effective embodiments.

FIG. 1 illustrates an example wireless local area network (WLAN), in accordance with certain embodiments of the present disclosure.

FIG. 2 illustrates a block diagram of an access point (AP) and two stations, in accordance with certain embodiments of the present disclosure.

FIG. 3 illustrates various components that may be utilized in a wireless device, in accordance with certain embodiments of the present disclosure.

FIG. 4 is a flow diagram of example operations for establishing a direct link setup (DLS) between stations, in accordance with certain embodiments of the present disclosure.

FIG. 4A illustrates example components capable of performing the operations shown in FIG. 4.

FIG. 5 illustrates example exchange of messages corresponding to the operations shown in FIG. 4.

FIG. 6 is a flow diagram of example operations for establishing a direct link setup (DLS) between stations, in accordance with certain embodiments of the present disclosure.

FIG. 6A illustrates example components capable of performing the operations shown in FIG. 6.

FIG. 7 illustrates example exchange of messages corresponding to the operations shown in FIG. 6.

FIG. 8 is a flow diagram of example operations for establishing a direct link setup (DLS) between stations, in accordance with certain embodiments of the present disclosure.

FIG. 8A illustrates example components capable of performing the operations shown in FIG. 8.

FIG. 9 illustrates example exchange of messages corresponding to the operations shown in FIG. 8.

FIG. 10 is a flow diagram of example operations for establishing a direct link setup (DLS) between stations, in accordance with certain embodiments of the present disclosure.

FIG. 10A illustrates example components capable of performing the operations shown in FIG. 10.

FIG. 11 illustrates example exchange of messages corresponding to the operations shown in FIG. 10.

### DETAILED DESCRIPTION

Certain embodiments of the present disclosure provide techniques and apparatus for establishing direct link setup (DLS) connections between stations in a wireless local area network (WLAN). The DLS connections may be established in a manner that helps avoid collisions with hidden stations.

The word "exemplary" is used herein to mean "serving as an example, instance, or illustration." Any embodiment described herein as "exemplary" is not necessarily to be construed as preferred or advantageous over other embodiments. Also as used herein, the term "legacy stations" generally refers to wireless network nodes that support 802.11 n or earlier versions of the IEEE 802.11 standard.

The techniques described herein may be used in combination with various wireless technologies such as Code Division Multiple Access (CDMA), Orthogonal Frequency Division Multiplexing (OFDM), Time Division Multiple Access (TDMA), and so on. Multiple user terminals can concurrently transmit/receive data via different (1) orthogonal code channels for CDMA, (2) time slots for TDMA, or (3) sub-bands for OFDM. A CDMA system may implement IS-2000, IS-95, IS-856, Wideband-CDMA (W-CDMA), or some other standards. An OFDM system may implement IEEE 802.11 or some other standards. A TDMA system may implement GSM or some other standards. These various standards are known in the art.

### Exemplary WLAN System

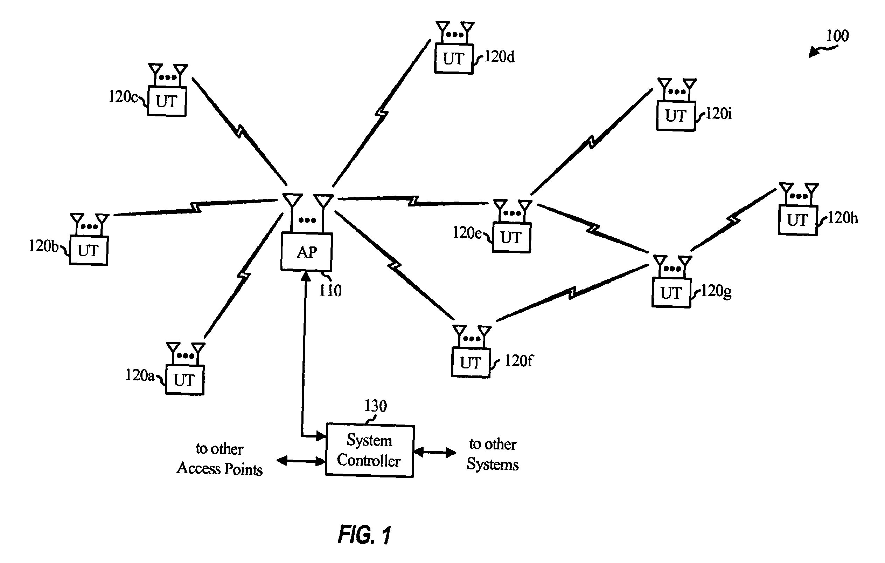

FIG. 1 shows a multiple-access WLAN system 100 with access points and user terminals or stations (STAs). For simplicity, only one access point 110 is shown in FIG. 1. An access point (AP) is generally a fixed station that communicates with the user terminals and may also be referred to as a base station or some other terminology. A user terminal may be fixed or mobile and may also be referred to as a mobile station, a station (STA), a client, a wireless device, or some other terminology. A user terminal or STA may be a wireless device, such as a cellular phone, a personal digital assistant (PDA), a handheld device, a wireless modem, a laptop computer, a personal computer, or any other type of device capable of wireless communications.

Access point 110 may communicate with one or more user terminals 120 at any given moment on the downlink and uplink. The downlink (i.e., forward link) is the communication link from the access point to the user terminals, and the uplink (i.e., reverse link) is the communication link from the user terminals to the access point. A user terminal may also communicate peer-to-peer with another user terminal. A system controller 130 couples to and provides coordination and control for the access points.

For certain embodiments, one or more of the user terminals 120 may be capable of communicating via spatial division multiple access (SDMA). For certain embodiments, one or more of the user terminals 120 may not support SDMA. Thus, for such embodiments that include a combination of user terminals 120 that support SDMA and those that do not, an AP 110 may be configured to communicate with both SDMA and non-SDMA user terminals.

System 100 may utilize one or more transmit and one or more receive antennas for data transmission on the downlink and uplink. Access point 110 may be equipped with a number Nap of one or more antennas and represents the multiple-input (MI) for downlink transmissions and the multiple-output (MO) for uplink transmissions. A set Nu of selected user terminals 120 collectively represents the multiple-output for downlink transmissions and the multiple-input for uplink transmissions. For pure SDMA, it is desired to have Nap ≥Nu≥ 1 if the data symbol streams for the Nu user terminals are not multiplexed in code, frequency, or time by some means. Nu may be greater than Nap if the data symbol streams can be multiplexed using different code channels with CDMA, disjoint sets of sub-bands with OFDM, and so on. Each selected user terminal transmits user-specific data to and/or receives user-specific data from the access point. In general, each selected user terminal may be equipped with one or multiple antennas (i.e., Nut ≥ 1). The Nu selected user terminals can have the same or different number of antennas.

System 100 may be a time division duplex (TDD) system or a frequency division duplex (FDD) system. For a TDD system, the downlink and uplink share the same frequency band. For an FDD system, the downlink and uplink use different frequency bands. System 100 may also utilize a single carrier or multiple carriers for transmission. Each user terminal may be equipped with a single antenna (e.g., in order to keep costs down) or multiple antennas (e.g., where the additional cost can be supported).

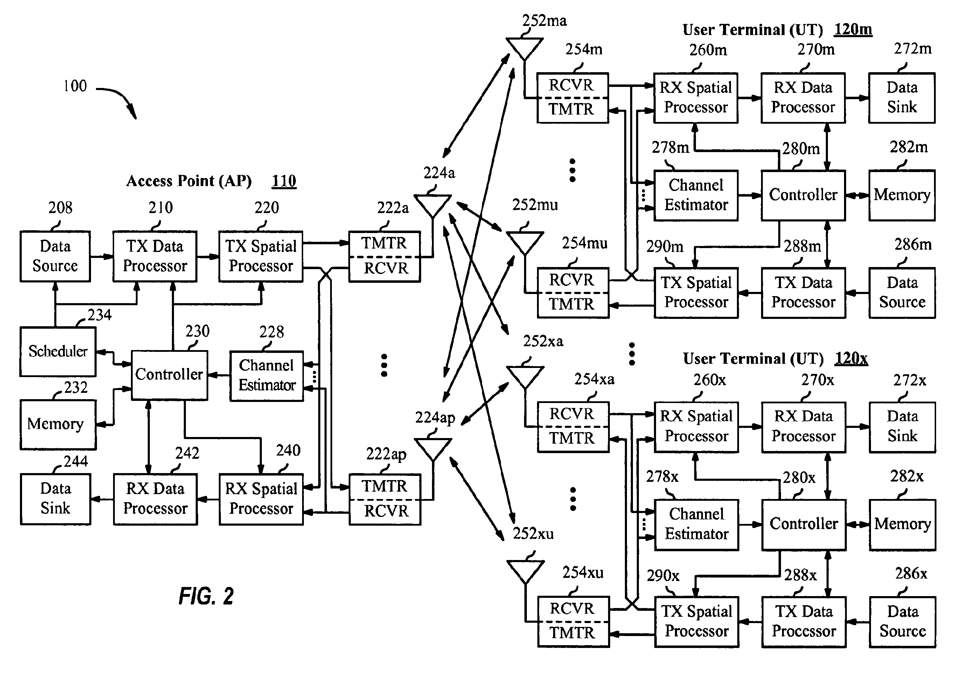

FIG. 2 shows an example block diagram of access point 110 and two user terminals 120m and 120x. While a MIMO configuration is shown, the techniques described herein also apply to devices using a single transmit-receive antenna pair.

Illustratively, access point 110 is equipped with Nap antennas 224a through 224ap. User terminal 120m is equipped with Nut,m antennas 252ma through 252mu, and user terminal 120x is equipped with Nut,x antennas 252xa through 252xu. Access point 110 is a transmitting entity for the downlink and a receiving entity for the uplink. Each user terminal 120 is a transmitting entity for the uplink and a receiving entity for the downlink. As used herein, a "transmitting entity" is an independently operated apparatus or device capable of transmitting data via a wireless channel, and a "receiving entity" is an independently operated apparatus or device capable of receiving data via a wireless channel. In the following description, the subscript "dn" denotes the downlink, the subscript "up" denotes the uplink, Nup user terminals are selected for simultaneous transmission on the uplink, Ndn user terminals are selected for simultaneous transmission on the downlink, Nup may or may not be equal to Ndn, and Nup and Ndn may be static values or can change for each scheduling interval. The beam-steering or some other spatial processing technique may be used at the access point and user terminal.

On the uplink, at each user terminal 120 selected for uplink transmission, a TX data processor 288 receives traffic data from a data source 286 and control data from a controller 280. TX data processor 288 processes (e.g., encodes, interleaves, and modulates) the traffic data {dup,m} for the user terminal based on the coding and modulation schemes associated with the rate selected for the user terminal and provides a data symbol stream {sup,m}. A TX spatial processor 290 performs spatial processing on the data symbol stream {sup,m} and provides Nut,m transmit symbol streams for the Nut,m antennas. Each transmitter unit (TMTR) 254 receives and processes (e.g., converts to analog, amplifies, filters, and frequency upconverts) a respective transmit symbol stream to generate an uplink signal. Nut,m transmitter units 254 provide Nut,m uplink signals for transmission from Nut,m antennas 252 to the access point 110.

A number Nup of user terminals may be scheduled for simultaneous transmission on the uplink. Each of these user terminals performs spatial processing on its data symbol stream and transmits its set of transmit symbol streams on the uplink to the access point.

At access point 110, Nap antennas 224a through 224ap receive the uplink signals from all Nup user terminals transmitting on the uplink. Each antenna 224 provides a received signal to a respective receiver unit (RCVR) 222. Each receiver unit 222 performs processing complementary to that performed by transmitter unit 254 and provides a received symbol stream. An RX spatial processor 240 performs receiver spatial processing on the Nap received symbol streams from Nap receiver units 222 and provides Nup recovered uplink data symbol streams. The receiver spatial processing is performed in accordance with the channel correlation matrix inversion (CCMI), minimum mean square error (MMSE), successive interference cancellation (SIC), or some other technique. Each recovered uplink data symbol stream {sup,m} is an estimate of a data symbol stream {sup,m} transmitted by a respective user terminal. An RX data processor 242 processes (e.g., demodulates, deinterleaves, and decodes) each recovered uplink data symbol stream {sup,m} in accordance with the rate used for that stream to obtain decoded data. The decoded data for each user terminal may be provided to a data sink 244 for storage and/or a controller 230 for further processing.

On the downlink, at access point 110, a TX data processor 210 receives traffic data from a data source 208 for Ndn user terminals scheduled for downlink transmission, control data from a controller 230, and possibly other data from a scheduler 234. The various types of data may be sent on different transport channels. TX data processor 210 processes (e.g., encodes, interleaves, and modulates) the traffic data for each user terminal based on the rate selected for that user terminal. TX data processor 210 provides Ndn downlink data symbol streams for the Ndn user terminals. A TX spatial processor 220 performs spatial processing on the Ndn downlink data symbol streams, and provides Nap transmit symbol streams for the Nap antennas. Each transmitter unit (TMTR) 222 receives and processes a respective transmit symbol stream to generate a downlink signal. Nap transmitter units 222 provide Nap downlink signals for transmission from Nap antennas 224 to the user terminals.

At each user terminal 120, Nut,m antennas 252 receive the Nap downlink signals from access point 110. Each receiver unit (RCVR) 254 processes a received signal from an associated antenna 252 and provides a received symbol stream. An RX spatial processor 260 performs receiver spatial processing on Nut,m received symbol streams from Nut,m receiver units 254 and provides a recovered downlink data symbol stream {sdn,m} for the user terminal. The receiver spatial processing is performed in accordance with the CCMI, MMSE, or some other technique. An RX data processor 270 processes (e.g., demodulates, deinterleaves, and decodes) the recovered downlink data symbol stream to obtain decoded data for the user terminal.

At each user terminal 120, Nut,m antennas 252 receive the Nap downlink signals from access point 110. Each receiver unit (RCVR) 254 processes a received signal from an associated antenna 252 and provides a received symbol stream. An RX spatial processor 260 performs receiver spatial processing on Nut,m received symbol streams from Nut,m receiver units 254 and provides a recovered downlink data symbol stream {sdn,m} for the user terminal. The receiver spatial processing is performed in accordance with the CCMI, MMSE, or some other technique. An RX data processor 270 processes (e.g., demodulates, deinterleaves, and decodes) the recovered downlink data symbol stream to obtain decoded data for the user terminal.

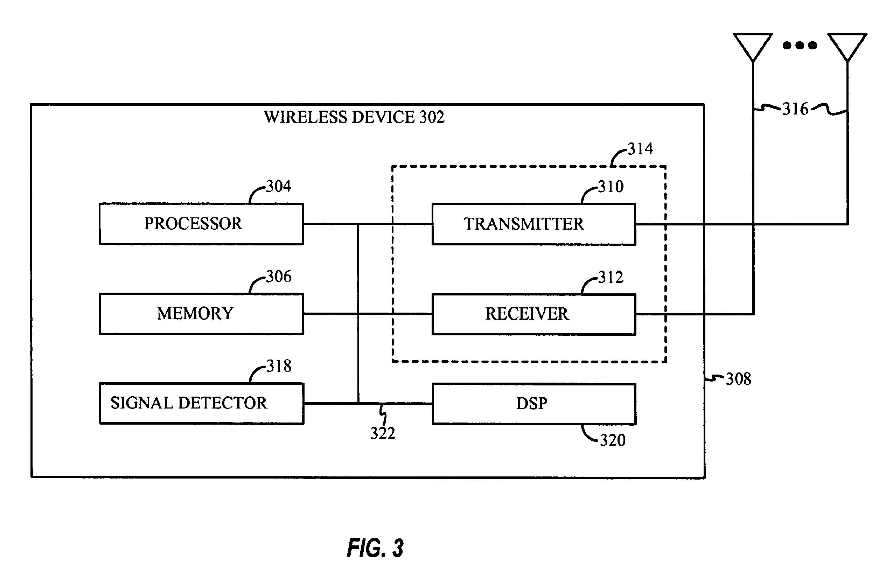

FIG. 3 illustrates various components that may be utilized in a wireless device 302 that may be employed within the system 100. The wireless device 302 is an example of a device that may be configured to implement the various methods described herein. The wireless device 302 may be an access point 110 or a user terminal 120.

The wireless device 302 may include a processor 304 which controls operation of the wireless device 302. The processor 304 may also be referred to as a central processing unit (CPU). Memory 306, which may include both read-only memory (ROM) and random access memory (RAM), provides instructions and data to the processor 304. A portion of the memory 306 may also include non-volatile random access memory (NVRAM). The processor 304 typically performs logical and arithmetic operations based on program instructions stored within the memory 306. The instructions in the memory 306 may be executable to implement the methods described herein.

The wireless device 302 may also include a housing 308 that may include a transmitter 310 and a receiver 312 to allow transmission and reception of data between the wireless device 302 and a remote location. The transmitter 310 and receiver 312 may be combined into a transceiver 314. A plurality of transmit antennas 316 may be attached to the housing 308 and electrically coupled to the transceiver 314. The wireless device 302 may also include (not shown) multiple transmitters, multiple receivers, and multiple transceivers.

The wireless device 302 may also include a signal detector 318 that may be used in an effort to detect and quantify the level of signals received by the transceiver 314. The signal detector 318 may detect such signals as total energy, energy per subcarrier per symbol, power spectral density and other signals. The wireless device 302 may also include a digital signal processor (DSP) 320 for use in processing signals.

The various components of the wireless device 302 may be coupled together by a bus system 322, which may include a power bus, a control signal bus, and a status signal bus in addition to a data bus.

### Exemplary Protection for Direct Link Setup (DLS) Transmissions

Certain embodiments of the present disclosure allow a direct link setup (DLS) connection to be established between stations in a manner that may help avoid collision with transmissions from other stations. As will be described below, DLS connections may be "protected" in that they may be established using mechanisms that allow potentially hidden stations to become aware of the DLS connection and adjust their network allocation vector (NAV) settings such that they will not transmit on the medium until the DLS transmissions are complete.

To facilitate understanding, the following examples illustrate various techniques for establishing a protected DLS connection between two stations (STA1 and STA2). However, those skilled in the art will appreciate that the techniques may be extended (and in some case repeated) to establish separate protected DLS connections between a station and different DLS counterpart stations and/or between multiple pairs of stations.

### Exemplary Protection using Ready to Send (RTS) / Clear to Send (CTS)

For certain embodiments, a modified form of a request to send (RTS) and clear to send (CTS) handshaking protocol may be used to establish a protected DLS connection between stations. For example, an initiating STA may send a RTS frame, but with the source address set to the media access control (MAC) address of a counterpart STA the DLS connection is to be established with, or the address of its DLS counterpart.

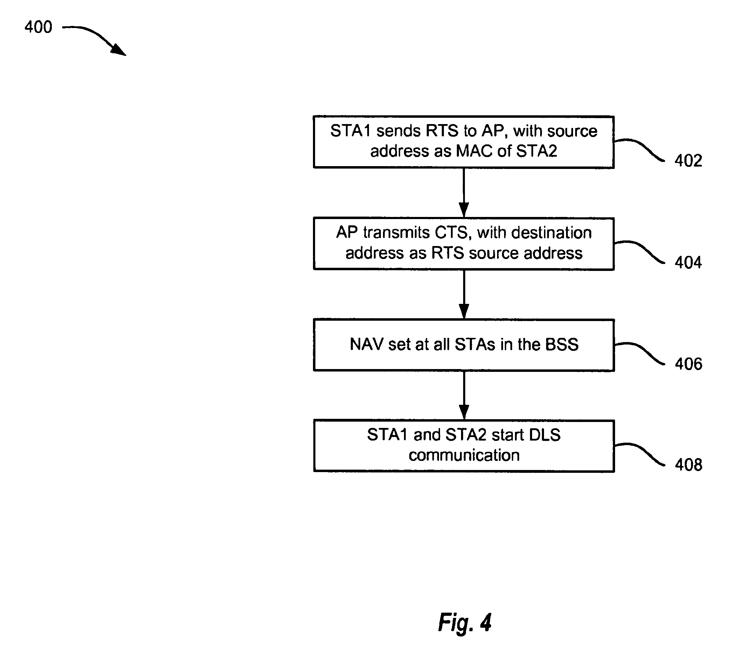

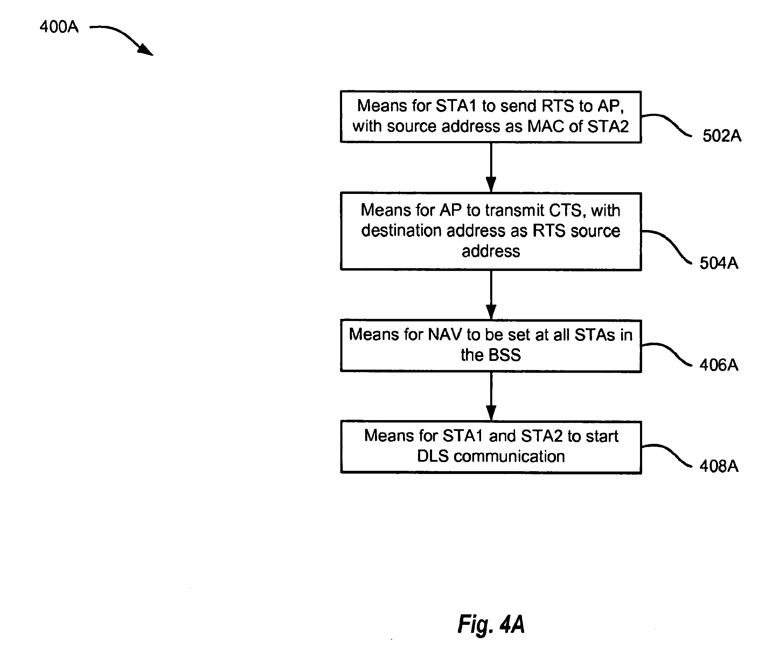

FIG. 4 illustrates example operations for establishing a protected DLS connection, in which a first station (STA1, in this example), initiates a DLS session by sending such a RTS frame. Rather than including its own media access control (MAC) address in transmit address field (TA), STA1 includes the MAC address of its target DLS counterpart (STA2, in this example).

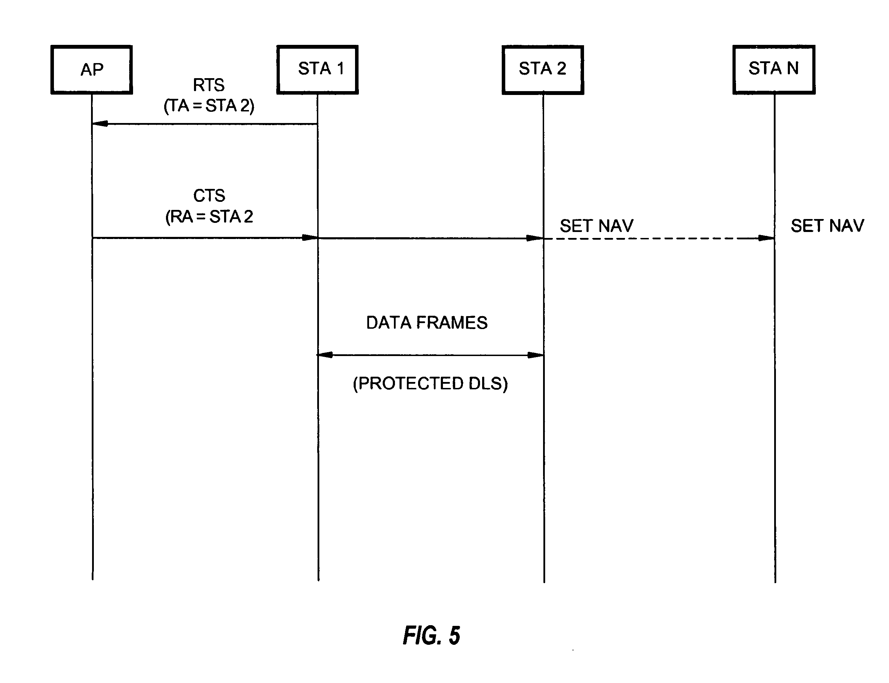

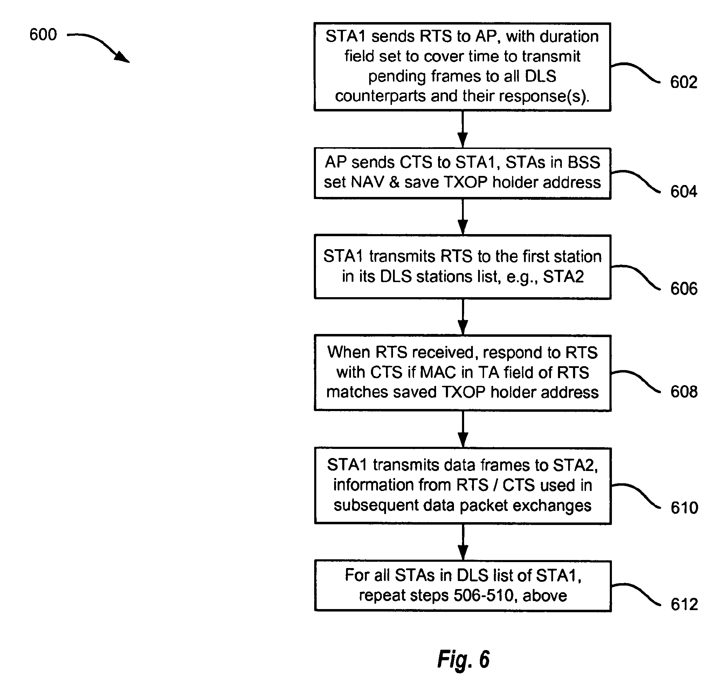

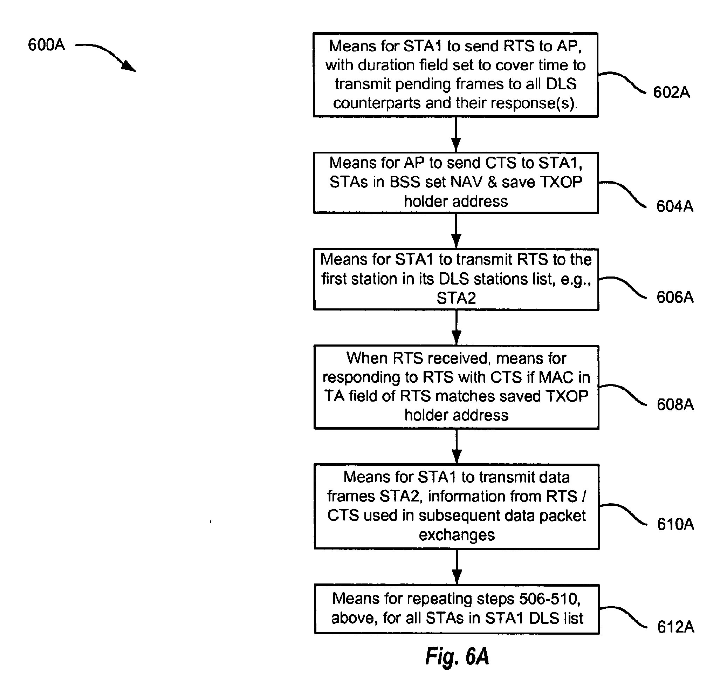

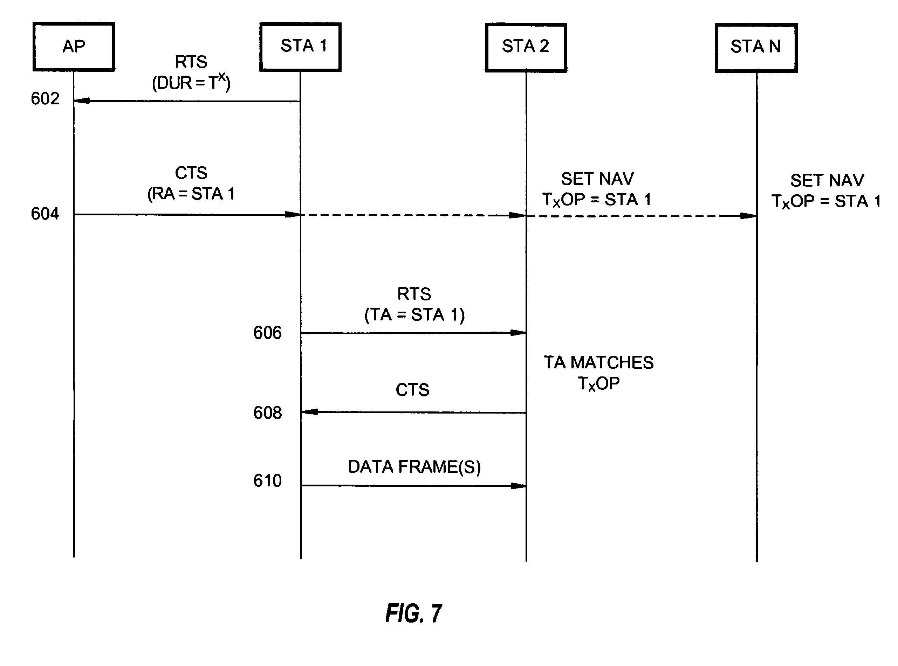

The operations of FIG. 4 may be understood with reference to FIG. 5, which illustrates a corresponding exchange of frames. Similar reference numbers are used in FIG. 5 to identify frames corresponding to the operations shown in FIG. 4. FIG. 5 also illustrates an additional station (STA-N) representative of all other stations in the BSS that should hear the frames transmitted by STA1, STA2, and the AP and act accordingly, (e.g., updating NAV settings and/or storing transmit opportunity holder address as will be described below). FIGs. 7, 9, and 11 serve similar purposes, illustrating frames corresponding to FIGs. 6, 8, and 10, respectively.

The operations begin, at 402, with a first station STA1 sending an RTS frame directed to the AP. The source address of this RTS is set to the MAC address of its DLS counterpart STA2.

At 404, in response to the RTS, the AP transmits a CTS frame, with STA2 as the destination address (copied from the source address of the RTS). All stations in the system, should have detected at least the CTS transmitted by the AP.

At 406, this RTS / CTS combination sets the network allocation vector (NAV) at all STAs in the BSS. At step 408, STA1 and STA2 can now exchange packets directly, and these DLS transmissions will be protected. In other words, as all STAs in the BSS are capable of hearing the AP, they will set their NAV values accordingly. To protect the expected DLS data exchange, the Duration field of the RTS and CTS frames may be set to accommodate to time expected to transmit the pending frames to all of its DLS counterparts and their response(s) and may included a margin, for example, as required by design.

Figure 6 illustrates alternative example operations 600 for protecting DLS transmissions using an RTS / CTS exchange with an AP according to certain embodiments. For certain embodiments, to perform these operations, QSTAs may be configured to store the MAC address of the transmit opportunity (TXOP) holder and match the stored TXOP MAC address with the transmit address of the incoming packet. Note that, generally, a TXOP is a bounded time interval during which a station can send as many frames as possible (as long as the duration of the transmissions does not extend beyond the maximum duration of the TXOP). If a frame is too large to be transmitted in a single TXOP, it may be fragmented into smaller frames and transmitted in multiple TXOPs.

The operations again assume that STA1 initiates establishing a DLS connection with STA2. The operations of FIG. 6 may be understood with reference to FIG. 7, which illustrates a corresponding exchange of frames. Similar reference numbers are used in FIG. 7 to identify frames corresponding to the operations shown in FIG. 6.

At step 602, STA1 sends an RTS directed to the AP. The duration field in this RTS is set to cover the time required (which may included a margin, as required by design) to transmit the pending frames to all of its DLS counterparts and their response(s). In this case, the source address of the RTS may be set to the MAC address of STA1.

At step 604, the AP sends a CTS to STA1. As all STAs in the BSS should hear the CTS, they should set their NAVs accordingly. In addition, the STAs may save the TXOP holder MAC address, which is the TA address of the RTS or the RA address of CTS frame (STA1, in this example).

At step 606, STA1 transmits RTS to the first station in its DLS stations list (e.g., STA2). At step 608, when the RTS frame is received by STA2, the specified recipient, STA2 will check the MAC address in the TA field in the RTS frame and compare it to the saved TXOP holder address (which is the MAC address of the STA1). If the RTS TA address does not match the saved TXOP holder address, then STA2 may simply not respond to the RTS.

On the other hand, if the RTS TA address matches the saved TXOP holder address, then STA2 will respond to the RTS with a CTS. STA2 may send the CTS frame after a short interframe space (SIFS) time without regard for, and without resetting, its NAV. Note that, in general, short interframe space (SIFS) is a small gap between the data frame and its acknowledgment.

At step 610, STA1 will transmit any data frames to be sent to STA2, following the RTS / CTS. Transmission of the these data frames should be protected, given the other stations updated their NAV settings based on the duration field value in the RTS and/or CTS frames. Information received from the RTS / CTS such as sounding or rate feedback may also be used to adjust transmissions of the subsequent data packet exchanges.

If STA1 has other stations in its DLS list then at 612, operations 606-610, may be repeated for the other STAs in the DLS stations list.

### Exemplary Techniques using CTS-to-Self

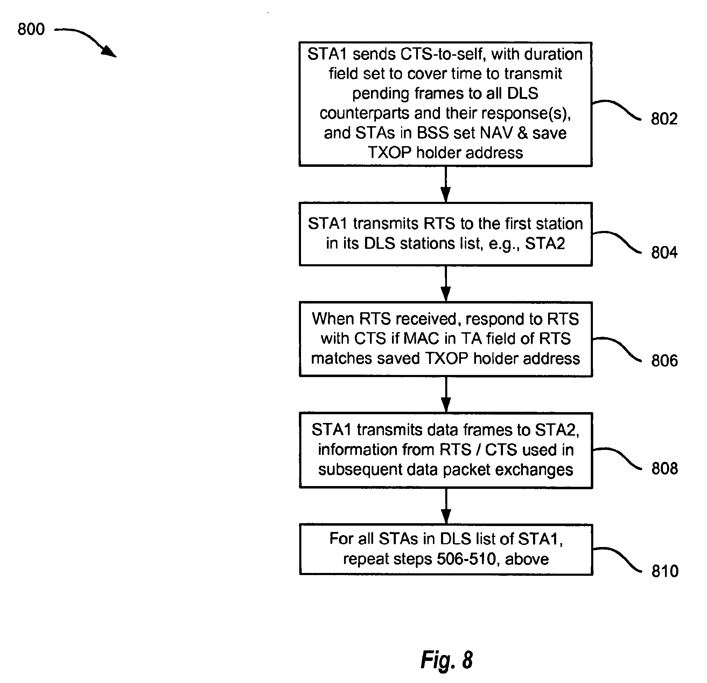

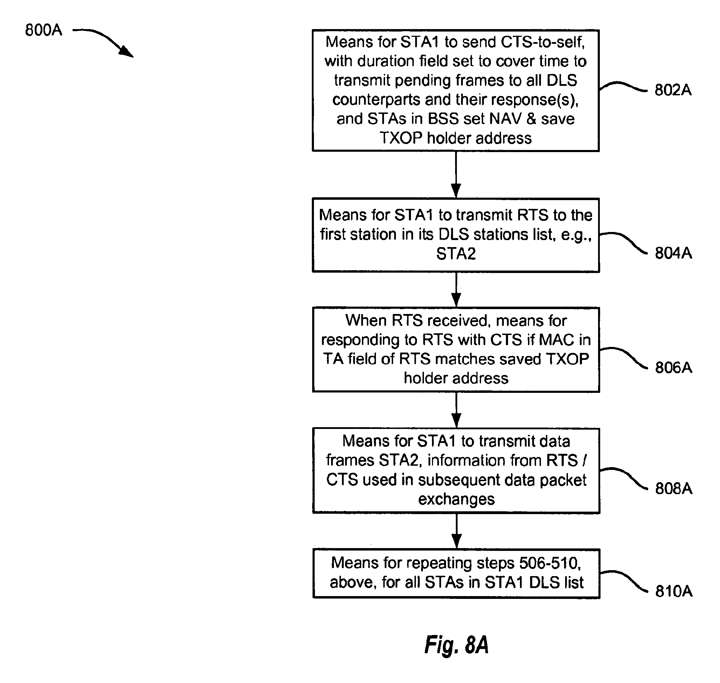

Figure 8 illustrates example operations 800 for protecting DLS transmissions using a "CTS-to-self" according to certain embodiments, where a station sends a CTS frame specifying its own MAC address as the recipient address. As with the operations shown in FIG. 8, these operations may be used in certain embodiments when the QSTAs are capable of storing the MAC address of the TXOP holder and are able to match it with the transmit address of the incoming packet.

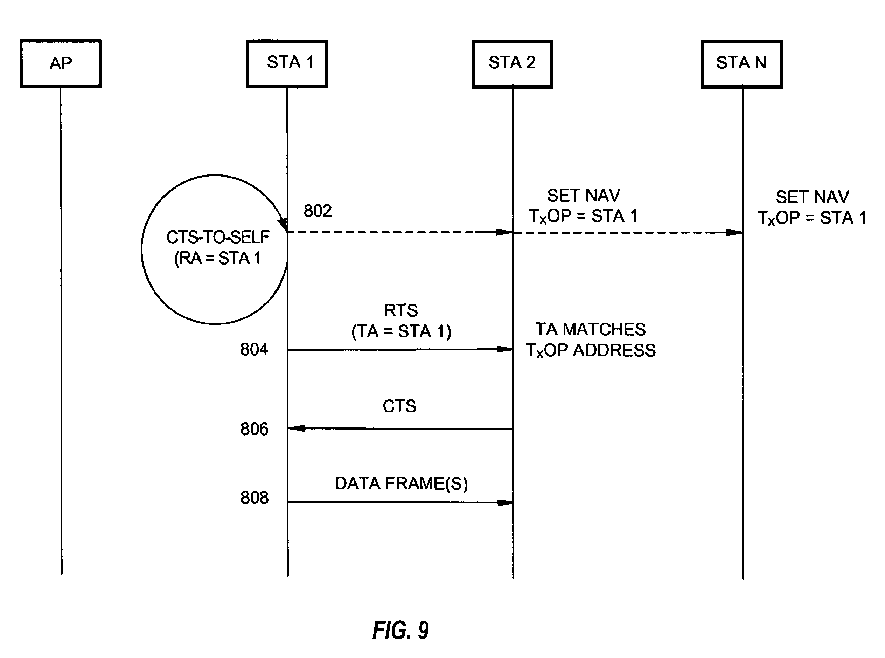

The operations again assume that STA1 initiates establishing a DLS connection with STA2. The operations of FIG. 8 may be understood with reference to FIG. 9, which illustrates a corresponding exchange of frames. Similar reference numbers are used in FIG. 9 to identify frames corresponding to the operations shown in FIG. 8.

At step 802, STA1 sends a CTS-to-self as the first frame to initiate the DLS transaction. The duration field in the CTS-to-self may be set to cover the time required to transmit the pending frames and their response(s). In response, all STAs that hear the CTS-to-self in the BSS may update their NAV and save the TXOP holder address which is the RA address in the CTS-to-self.

At step 804, STA1 transmits RTS to the first station in its DLS stations list (STA2 in this example).

At step 806, when the RTS frame is received by the STA2, the specified recipient, STA2 will check the MAC address in the TA field in the RTS frame and compare it to the saved TXOP holder address (which is the MAC address of the STA1). If the TA address does not match the saved TXOP holder address, the STA may simply not respond to the RTS. On the other hand, if the TA address does match the saved TXOP holder address, STA2 may respond with a CTS after SIFS time without regard for, and without resetting its NAV.

At step 808, STA1 will transmit any data frames to be sent to STA2, following the RTS / CTS. Transmission of the these data frames should be protected, given the other stations updated their NAV settings based on the duration field value in the RTS and/or CTS frames. As noted above, information received from the RTS / CTS such as sounding or rate feedback can be used in the following data packet exchanges. At 810, operations 804-808, may be repeated for all STAs in the DLS stations list of STA1.

### Exemplary Protection of DLS Frames in HCCA

Certain 802.11 standards specify a Hybrid Coordination Function (HCF). Within the HCF, there are two methods of channel access, similar to those defined in earlier 802.11 MAC standards: HCF Controlled Channel Access (HCCA) and Enhanced Distributed Channel Access (EDCA) that allow traffic to be assigned different Traffic Classes (TC). Certain embodiments of the present disclosure may be utilized to protect DLS frames in an HCCA application.

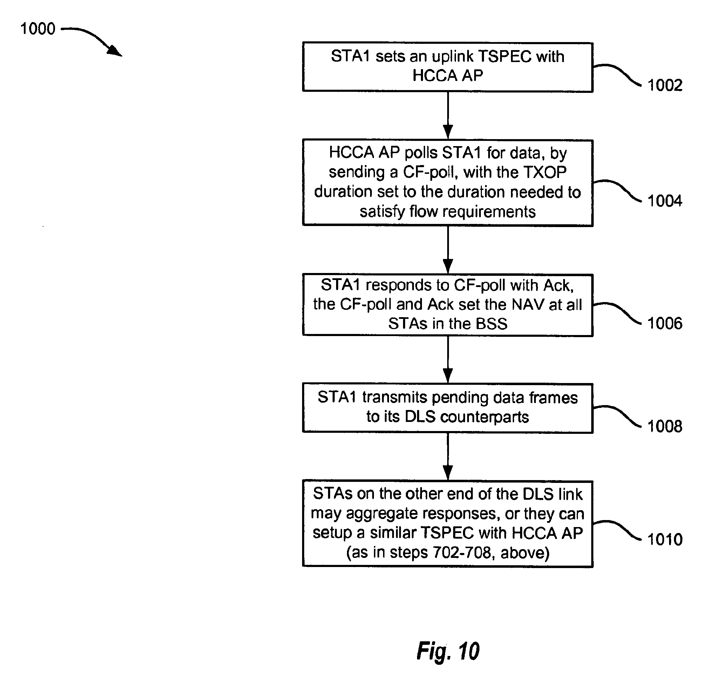

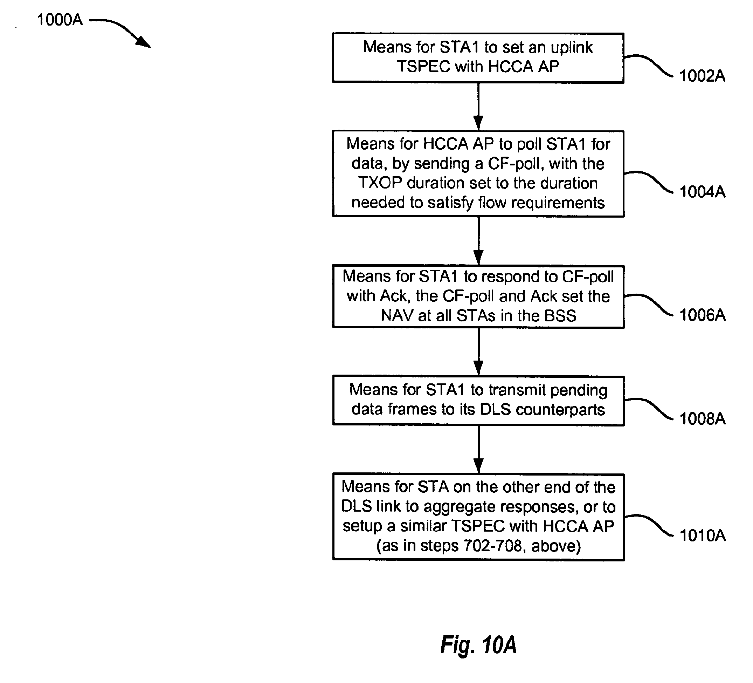

Figure 10 illustrates example operations 1000 of protecting DLS frames in HCF Controlled Channel Access, according to certain embodiments.

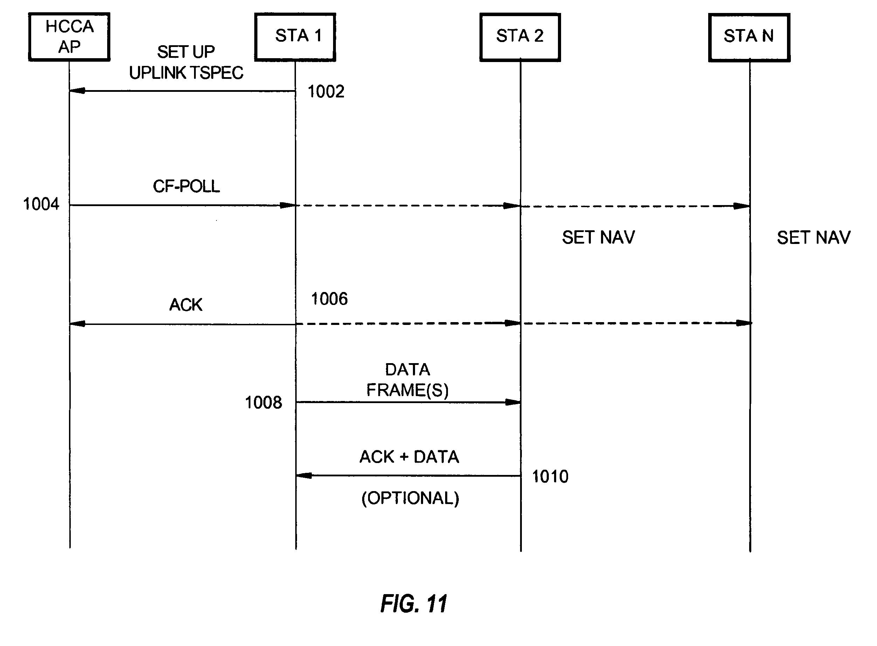

The operations assume the AP is an HCCA AP and again assume that STA1 initiates establishing a DLS connection with STA2. The operations of FIG. 10 may be understood with reference to FIG. 11, which illustrates a corresponding exchange of frames. Similar reference numbers are used in FIG. 11 to identify frames corresponding to the operations shown in FIG. 10.

At step 1002, STA1 sets up an uplink transmit specification (TSPEC) with the HCCA AP.

At step 1004, the HCCA AP polls STA1 for data. This can be done by sending a contention free poll (CF-poll), and the TXOP duration will be set to the duration required to satisfy flow requirements.

At step 1006, STA1 responds to the CF-poll with an acknowledgement (ACK, or CF- ACK). The CF-poll and the ACK will have duration values designed to set the NAV at all STAs in the BSS to accommodate the DLS data frames.

At step 1008, STA1 transmits pending data frames to its DLS counterparts. At step 1010, the STAs on the other end of the DLS link may aggregate their data frames with the response, and/or they may setup a similar TSPEC with the HCCA AP (as in operations 1002-1008, above).

The various operations of methods described above may be performed by various hardware and/or software component(s) and/or module(s) corresponding to means-plus-function blocks illustrated in the figures. Generally, where there are methods illustrated in figures having corresponding counterpart means-plus-function figures, the operation blocks correspond to means-plus-function blocks with similar numbering. For example, operations 400, 600, 800, and 1000 illustrated in FIGs. 4, 6, 8, and 10 correspond to means-plus-function blocks 400A, 600A, 800A, and 1000A illustrated in FIGs. 4A, 6A, 8A, and 10A.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

Information and signals may be represented using any of a variety of different technologies and techniques. For example, data, instructions, commands, information, signals and the like that may be referenced throughout the above description may be represented by voltages, currents, electromagnetic waves, magnetic fields or particles, optical fields or particles or any combination thereof.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, EPROM memory, EEPROM memory, registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method (400) for establishing a direct link setup, DLS, connection between stations in a wireless local area network, comprising:
sending (402) a ready-to-send, RTS, frame by a first station, directed to an access point, AP, within a basic service set, BSS;
receiving a clear-to-send, CTS, frame sent (404) from the AP, sent responsive to the RTS, wherein at least one of the RTS and CTS frames have duration fields set to accommodate expected data frame transmissions from the first station to a second station in the BSS on the DLS connection;
exchanging (408), by the first station, data frames directly with the second station on the DLS connection; and **characterized in that**
a source address of the RTS is set to a media access control, MAC, address of the second station.

2. The method of claim 1, wherein the destination address of the CTS is set to the MAC address of the second station, copied by the AP from the source address of the RTS.

3. The method of claim 1, further comprising:
sending another ready-to-send, RTS, frame from a first station, directed to an access point, AP, within a basic service set, BSS; and
receiving a clear-to-send, CTS, frame sent from the AP, sent in response to the RTS, wherein at least one of the RTS and CTS frames have duration fields set to accommodate expected data frame transmissions from the first station to a third station in the BSS on a different DLS connection.

4. An apparatus for establishing a direct link setup, DLS, connection between stations in a wireless local area network, comprising:
logic for sending a ready-to-send, RTS, frame by a first station, directed to an access point, AP, within a basic service set, BSS;
logic for receiving a clear-to-send, CTS, frame sent from the AP, sent responsive to the RTS, wherein at least one of the RTS and CTS frames have duration fields set to accommodate expected data frame transmissions from the first station to a second station in the BSS on the DLS connection; and
logic for exchanging, by the first station, data frames directly with the second station on the DLS connection; and **characterized in that**
a source address of the RTS is set to a media access control, MAC, address of the second station.

5. The apparatus of claim 4, wherein the destination address of the CTS is set to the MAC address of the second station, copied by the AP from the source address of the RTS.

6. The apparatus of claim 4, further comprising:
logic for sending another ready-to-send, RTS, frame from a first station, directed to an access point, AP, within a basic service set, BSS; and
logic for receiving a clear-to-send, CTS, frame sent from the AP, sent in response to the RTS, wherein at least one of the RTS and CTS frames have duration fields set to accommodate expected data frame transmissions from the first station to a third station in the BSS on a different DLS connection.

7. An apparatus (400A) for establishing a direct link setup, DLS, connection between stations in a wireless local area network, comprising:
means (502A) for sending a ready-to-send, RTS, frame by a first station, directed to an access point within a basic service set, BSS;
means for receiving a clear-to-send, CTS, frame sent from the AP, sent responsive to the RTS, wherein at least one of the RTS and CTS frames have duration fields set to accommodate expected data frame transmissions from the first station to a second station in the BSS on the DLS connection;
means (408A) for exchanging, by the first station, data frames directly with the second station on the DLS connection; and **characterized in that**
a source address of the RTS is set to a media access control, MAC, address of the second station.

8. The apparatus of claim 7, wherein the destination address of the CTS is set to the MAC address of the second station, copied by the AP from the source address of the RTS.

9. The apparatus of claim 7, further comprising:
means for sending another ready-to-send, RTS, frame from a first station, directed to an access point, AP, within a basic service set, BSS; and
means for receiving a clear-to-send, CTS, frame sent from the AP, sent in response to the RTS, wherein at least one of the RTS and CTS frames have duration fields set to accommodate expected data frame transmissions from the first station to a third station in the BSS on a different DLS connection.

10. A computer-program product for establishing a direct link setup, DLS, connection between stations in a wireless local area network, comprising a computer readable medium having instructions stored thereon, the instructions being executable by one or more processors and the instructions comprising:
instructions for sending a ready-to-send, RTS frame by a first station, directed to an access point, AP, within a basic service set, BSS;
instructions for receiving a clear-to-send, CTS, frame sent from the AP, sent responsive to the RTS, wherein at least one of the RTS and CTS frames have duration fields set to accommodate expected data frame transmissions from the first station to a second station in the BSS on the DLS connection;
instructions for exchanging, by the first station, data frames directly with the second station on the DLS connection; and **characterized in that**
a source address of the RTS is set to a media access control, MAC, address of the second station.

11. The computer-program product of claim 10, wherein the destination address of the CTS is set to the MAC address of the second station, copied by the AP from the source address of the RTS.

12. The computer-program product of claim 10, wherein the instructions further comprise:
instructions for sending another ready-to-send, RTS, frame from a first station, directed to an access point within a basic service set, BSS; and
instructions for receiving a clear-to-send, CTS, frame sent from the AP, sent in response to the RTS, wherein at least one of the RTS and CTS frames have duration fields set to accommodate expected data frame transmissions from the first station to a third station in the BSS on a different DLS connection.

## Patentansprüche

1. Ein Verfahren (400) zum Herstellen einer DLS (= direct link setup)-Verbindung bzw. Direktverbindungsaufbauverbindung zwischen Stationen in einem drahtlosen Nahbereichsnetzwerk, wobei das Verfahren aufweist:
Senden (402) eines RTS (= ready-to-send) Rahmens- bzw. Sendebereitschaftrahmens durch eine erste Station gerichtet an einen Zugangspunkt, AP (= access point) innerhalb eines Grunddienstsatzes, BSS (= basic service set);
Empfangen eines CTS (= clear-to-send) Rahmens- bzw. Fertig-Zum-Senden-Rahmens gesendet (404) von dem AP und zwar gesendet ansprechend auf den RTS, wobei wenigstens einer von den RTS und
CTS Rahmen Zeitdauer- bzw. Dauerfelder besitzen, die eingestellt sind zum Aufnehmen erwarteter Datenrahmenübertragungen von der ersten Station zu einer zweiten Station in dem BSS auf der DLS Verbindung;
Austauschen (408) durch die erste Station, von Datenrahmen direkt mit der zweiten Station auf der DLS Verbindung; und **gekennzeichnet dadurch dass**
eine Quellenadresse von dem RTS gesetzt bzw. eingestellt wird auf eine MAC (= media access control) Adresse bzw. Medienzugriffssteuerungsadresse von der zweiten Station.

2. Verfahren nach Anspruch 1, wobei die Zieladresse von dem CTS gesetzt ist auf die MAC Adresse von der zweiten Station, kopiert durch den AP von der Quellenadresse von dem RTS.

3. Verfahren nach Anspruch 1, das ferner aufweist:
Senden eines anderen RTS (= ready-to-send) Rahmens von einer ersten Station, gerichtet an einen Zugangspunkt, AP, innerhalb eines Grunddienstsatzes, BSS; und
Empfangen eines CTS (= clear-to-send) Rahmens, gesendet von dem AP, und zwar gesendet ansprechend auf den RTS, wobei wenigstens einer von den RTS und CTS Rahmen Dauerfelder besitzen, die eingestellt bzw. gesetzt sind zum Aufnehmen erwarteter Datenrahmenübertragungen von der ersten Station zu einer dritten Station in dem BSS auf einer unterschiedlichen DLS Verbindung.

4. Eine Vorrichtung zum Herstellen bzw. Aufbauen einer DLS (= direct link setup) Verbindung bzw. Direktverbindungsaufbauverbindung zwischen Stationen in einem drahtlosen Nahbereichsnetzwerk bzw. local area network, wobei die Vorrichtung aufweist:
Logik zum Senden eines RTS -(= ready-to-send) Rahmens bzw. Sendebereitschaftrahmens durch eine erste Station gerichtet an einen Zugangspunkt, AP (= access point) innerhalb eines Grunddienstsatzes, BSS (= basic service set);
Logik zum Empfangen eines CTS (= clear-to-send) Rahmens bzw. Fertig-Zum-Senden-Rahmens gesendet von dem AP und zwar gesendet ansprechend auf den RTS, wobei wenigstens einer von den RTS und CTS Rahmen Zeitdauer bzw. Dauerfelder besitzen, die eingestellt sind zum Aufnehmen erwarteter Datenrahmenübertragungen von der ersten Station zu einer zweiten Station in dem BSS auf der DLS Verbindung; und
Logik zum Austauschen durch die erste Station, von Datenrahmen direkt mit der zweiten Station auf der DLS Verbindung; und **gekennzeichnet dadurch dass**
eine Quellenadresse von dem RTS gesetzt bzw. eingestellt wird auf eine MAC (= media access control) Adresse bzw. Medienzugriffssteuerungsadresse von der zweiten Station.

5. Vorrichtung nach Anspruch 4, wobei die Zieladresse von dem CTS gesetzt ist auf die MAC Adresse von der zweiten Station, kopiert durch den AP von der Quellenadresse von dem RTS.

6. Vorrichtung nach Anspruch 4, wobei die Vorrichtung ferner aufweist:
Logik zum Senden eines anderen RTS (= ready-to-send) Rahmens von einer ersten Station, gerichtet an einen Zugangspunkt, AP, innerhalb eines Grunddienstsatzes, BSS; und
Logik zum Empfangen eines CTS (clear-to-send) Rahmens, gesendet von dem AP, und zwar gesendet ansprechend auf den RTS, wobei wenigstens einer von den RTS und CTS Rahmen Dauerfelder besitzen,
die eingestellt bzw. gesetzt sind zum Aufnehmen erwarteter Datenrahmenübertragungen von der ersten Station zu einer dritten Station in dem BSS auf einer unterschiedlichen DLS Verbindung.

7. Eine Vorrichtung (400A) zum Herstellen bzw. Aufbauen einer DLS (= direct link setup) Verbindung bzw. Direktverbindungsaufbauverbindung zwischen Stationen in einem drahtlosen Nahbereichsnetzwerk bzw. local area network, wobei die Vorrichtung aufweist:
Mittel (502A) zum Senden eines RTS (= ready-to-send) Rahmens bzw. Sendebereitschaftrahmens durch eine erste Station gerichtet an einen Zugangspunkt bzw. access point innerhalb eines Grunddienstsatzes, BSS (= basic service set);
Mittel zum Empfangen eines CTS (= clear-to-send) Rahmens bzw. Fertig-Zum-Senden-Rahmens gesendet von dem AP und zwar gesendet ansprechend auf den RTS, wobei wenigstens einer von den RTS und CTS Rahmen Zeitdauer bzw. Dauerfelder besitzen, die eingestellt sind zum Aufnehmen erwarteter Datenrahmenübertragungen von der ersten Station zu einer zweiten Station in dem BSS auf der DLS Verbindung;
Mittel (408A) zum Austauschen durch die erste Station, von Datenrahmen direkt mit der zweiten Station auf der DLS Verbindung; und **gekennzeichnet dadurch dass**
eine Quellenadresse von dem RTS gesetzt bzw. eingestellt wird auf eine MAC (= media access control) Adresse bzw. Medienzugriffssteuerungsadresse von der zweiten Station.

8. Vorrichtung nach Anspruch 7, wobei die Zieladresse von dem CTS gesetzt ist auf die MAC Adresse von der zweiten Station, kopiert durch den AP von der Quellenadresse von dem RTS.

9. Vorrichtung nach Anspruch 7, wobei die Vorrichtung ferner aufweist:
Mittel zum Senden eines anderen RTS (= ready-to-send) Rahmens von einer ersten Station, gerichtet an einen Zugangspunkt, AP, innerhalb eines Grunddienstsatzes, BSS; und
Mittel zum Empfangen eines CTS (= clear-to-send) Rahmens, gesendet von dem AP, und zwar gesendet ansprechend auf den RTS, wobei wenigstens einer von den RTS und CTS Rahmen Dauerfelder besitzen,
die eingestellt bzw. gesetzt sind zum Aufnehmen erwarteter Datenrahmenübertragungen von der ersten Station zu einer dritten Station in dem BSS auf einer unterschiedlichen DLS Verbindung.

10. Ein Computerprogrammprodukt zum Herstellen bzw. Aufbauen einer DLS (= direct link setup) Verbindung bzw. Direktverbindungsaufbauverbindung zwischen Stationen in einem drahtlosen Nahbereichsnetzwerk bzw. local area network, wobei das Computerprogrammprodukt ein computerlesbares Medium auf dem Instruktionen gespeichert sind, aufweist, wobei die Instruktionen ausführbar sind durch einen oder mehrere Prozessoren und die Instruktionen aufweisen:
Instruktionen zum Senden eines RTS (= ready-to-send) Rahmens bzw. Sendebereitschaftrahmens durch eine erste Station gerichtet an einen Zugangspunkt bzw. access point innerhalb eines Grunddienstsatzes, BSS (= basic service set);
Instruktionen zum Empfangen eines CTS (= clear-to-send) Rahmens bzw. Fertig-Zum-Senden-Rahmens gesendet von dem AP und zwar gesendet ansprechend auf den RTS, wobei wenigstens einer von den RTS und CTS Rahmen Zeitdauer bzw. Dauerfelder besitzen, die eingestellt sind zum Aufnehmen erwarteter Datenrahmenübertragungen von der ersten Station zu einer zweiten Station in dem BSS auf der DLS Verbindung;
Instruktionen zum Austauschen durch die erste Station, von Datenrahmen direkt mit der zweiten Station auf der DLS Verbindung; und **gekennzeichnet dadurch dass**
eine Quellenadresse von dem RTS gesetzt bzw. eingestellt wird auf eine MAC (= media access control) Adresse bzw. Medienzugriffssteuerungsadresse von der zweiten Station.

11. Computerprogrammprodukt nach Anspruch 10, wobei die Zieladresse von dem CTS gesetzt ist auf die MAC Adresse von der zweiten Station, kopiert durch den AP von der Quellenadresse von dem RTS.

12. Computerprogrammprodukt nach Anspruch 10, wobei die Instruktionen ferner aufweisen:
Instruktionen zum Senden eines anderen RTS (= ready-to-send) Rahmens von einer ersten Station, gerichtet an einen Zugangspunkt, innerhalb eines Grunddienstsatzes, BSS; und
Instruktionen zum Empfangen eines CTS (= clear-to-send) Rahmens, gesendet von dem AP, und zwar gesendet ansprechend auf den RTS, wobei wenigstens einer von den RTS und CTS Rahmen Dauerfelder besitzen, die eingestellt bzw. gesetzt sind zum Aufnehmen erwarteter Datenrahmenübertragungen von der ersten Station zu einer dritten Station in dem BSS auf einer unterschiedlichen DLS Verbindung.

## Revendications

1. Procédé (400) pour établir une connexion d'établissement de liaison directe, DLS, entre des stations dans un réseau local sans fil, comprenant les étapes suivantes :
envoyer (402), par une première station, une trame prêt-à-envoyer, RTS, adressée à un point d'accès, AP, dans un ensemble de service de base, BSS ;
recevoir une trame autorisé-à-envoyer, CTS, (404) envoyée à partir de l'AP, envoyée en réponse au RTS, au moins l'une des trames RTS et CTS ayant des champs de durée réglés pour prendre en charge des transmissions de trames de données attendues à partir de la première station vers une deuxième station dans le BSS sur la connexion DLS ;
échanger (408), par la première station, des trames de données directement avec la deuxième station sur la connexion DLS ; et **caractérisé en ce que**
une adresse source du RTS est réglée à une adresse de commande d'accès au support, MAC, de la deuxième station.

2. Procédé selon la revendication 1, dans lequel l'adresse de destination du CTS est réglée à l'adresse MAC de la deuxième station, copiée par l'AP à partir de l'adresse source du RTS.

3. Procédé selon la revendication 1, comprenant en outre les étapes suivantes :
envoyer une autre trame prêt-à-envoyer, RTS, à partir d'une première station, adressée à un point d'accès, AP, dans un ensemble de service de base, BSS ; et
recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une troisième station dans le BSS sur une connexion DLS différente.

4. Dispositif pour établir une connexion d'établissement de liaison directe, DLS, entre des stations dans un réseau local sans fil, comprenant :
de la logique pour envoyer, par une première station, une trame prêt-à-envoyer, RTS, adressée à un point d'accès, AP, dans un ensemble de service de base, BSS ;
de la logique pour recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une deuxième station dans le BSS de la connexion DLS ; et
de la logique pour échanger, par la première station, des trames de données directement avec la deuxième station sur la connexion DLS ; et **caractérisé en ce que**
une adresse source du RTS est réglée à une adresse de commande d'accès au support, MAC, de la deuxième station.

5. Dispositif selon la revendication 4, dans lequel l'adresse de destination du CTS est réglée à l'adresse MAC de la deuxième station, copiée par l'AP à partir de l'adresse source du RTS.

6. Dispositif selon la revendication 4, comprenant en outre :
de la logique pour envoyer une autre trame prêt-à-envoyer, RTS, à partir d'une première station, adressée à un point d'accès, AP, dans un ensemble de service de base, BSS ; et
de la logique pour recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une troisième station dans le BSS sur une connexion DLS différente.

7. Dispositif (400A) pour établir une connexion d'établissement de liaison directe, DLS, entre des stations dans un réseau local sans fil, comprenant :
des moyens (502A) pour envoyer, par une première station, une trame prêt-à-envoyer, RTS, adressée à un point d'accès dans un ensemble de service de base, BSS ;
des moyens pour recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une deuxième station dans le BSS sur la connexion DLS ;
des moyens (408A) pour échanger, par la première station, des trames de données directement avec la deuxième station sur la connexion DLS ; et **caractérisé en ce que**
une adresse source du RTS est réglée à une adresse de commande d'accès au support, MAC, de la deuxième station.

8. Dispositif selon la revendication 7, dans lequel l'adresse de destination du CTS est réglée à l'adresse MAC de la deuxième station, copiée par l'AP à partir de l'adresse source du RTS.

9. Dispositif selon la revendication 7, comprenant en outre :
des moyens pour envoyer une autre trame prêt-à-envoyer, RTS, à partir d'une première station, adressée à un point d'accès, AP, dans un ensemble de service de base, BSS ; et
des moyens pour recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une troisième station dans le BSS sur une connexion DLS différente.

10. Produit pour programme d'ordinateur destiné à établir une connexion d'établissement de liaison directe, DLS, entre des stations dans un réseau local sans fil, comprenant un support lisible par un ordinateur ayant des instructions mémorisées sur lui, les instructions étant exécutables par un ou plusieurs processeurs et les instructions comprenant :
des instructions pour envoyer, par une première station, une trame prêt-à-envoyer, RTS, adressée à un point d'accès, AP, dans un ensemble de service de base, BSS ;
des instructions pour recevoir une trame autorisé-à-envoyer, CTS, envoyée à partir de l'AP, envoyée en réponse au RTS, au moins l'une des trames RTS et CTS ayant des champs de durée réglés pour des transmissions de trames de données attendues à partir de la première station vers une deuxième station dans le BSS sur la connexion DLS ;
des instructions pour échanger, par la première station, des trames de données directement avec la deuxième station sur la connexion DLS ; et **caractérisé en ce que**
une adresse source du RTS est réglée à une adresse de commande d'accès au support, MAC, de la deuxième station.

11. Produit pour programme d'ordinateur selon la revendication 10, dans lequel l'adresse de destination du CTS est réglée à l'adresse MAC de la deuxième station, copiée par l'AP à partir de l'adresse source du RTS.

12. Produit pour programme d'ordinateur selon la revendication 10, dans lequel les instructions comprennent en outre :
des instructions pour envoyer une autre trame prêt-à-envoyer, RTS, à partir d'une première station, adressée à un point d'accès dans un ensemble de service de base, BSS ; et
des instructions pour recevoir une trame autorisé-à-envoyer, CTS, envoyée à partir de l'AP, envoyée en réponse au RTS, au moins l'une des trames RTS et CTS ayant des champs de durée réglés pour prendre en charge des transmissions de trames de données attendues à partir de la première station vers une troisième station dans le BSS sur une connexion DLS différente.
